# EUROPEAN PATENT APPLICATION

(11) **EP 4 390 320 A1**
(43) Date of publication of application: **26.06.2024**
(21) Application number: 21954294.1
(22) Date of filing: 18.08.2021
(51) Int. Cl.: G01C 21/34, G01C 21/00, G06Q 50/30, G16Y 40/60

(54) **PEDESTRIAN ROUTE PROVISION SYSTEM AND METHOD**

(71) Applicant: Lee, Si Wan, Seoul 03736 (KR)
(72) Inventor: Lee, Si Wan, Seoul 03736 (KR)
(74) Representative: Arnold & Siedsma
(86) International application number: PCT/KR2021/010947
(87) International publication number: WO 2023/022247

(57) **Abstract**

The objective of the present invention is to provide a pedestrian route provision system and method, which collect walkway information data according to the priority of a walkway information provision unit so as to enhance the reliability of data, and determine, on the basis of the walkway information data, whether movement is possible on a walkway according to the type of pedestrian such as wheelchair user or visually impaired, so as to provide an optimal walking route to a pedestrian.

## Description

### TECHNICAL FIELD

The present invention relates to a pedestrian route providing system and method, and more particularly, to a pedestrian route providing system and method that accurately verifies a possible route on a walkway and provides an optimal walkable route according to a pedestrian type.

### RELATED ART

Currently, the demand for navigation guidance using a mobile communication terminal from pedestrians is on increase and a route guidance is being provided to a pedestrian in the same manner as a route guidance for vehicles.

However, such a conventional route guidance system generally provides a route guidance service for vehicles. Therefore, in the case of guiding a route for a pedestrian, roads on which vehicles can drive are mainly displayed, which makes it difficult to provide safe route guidance information to pedestrians.

Also, a pedestrian route guidance using the conventional route guidance system provides a single piece of information, that is, vehicular road information in which vehicular roads and pedestrian sidewalks are not separated and accurate pedestrian route information may not be provided to pedestrians.

Also, the conventional route guidance system does not reflect information on facilities that may be inconvenient or useful when pedestrians pass, such as pedestrian sidewalk, bikeway, crosswalk, overpass, underpass, stairs, busy street, and ramp, and does not provide an optimal route accordingly.

Also, the conventional route guidance system does not provide an optimal route that reflects movement characteristics of each pedestrian, such as an adult, a child, the disabled, the elderly, a pedestrian accompanied by a transportation method, such as a stroller and a wheelchair, and the like.

### DETAILED DESCRIPTION

### TECHNICAL SUBJECT

The present invention is conceived to solve the problems found in the related art and aims to provide a pedestrian route providing system and method that may improve the reliability of data by collecting walkway information data according to priority of a walkway information providing unit and may provide an optimal walking route to a pedestrian by determining whether the corresponding pedestrian may move, that is, travel on a walkway according to a pedestrian type, such as a wheelchair user and the visually impaired, based on walkway information data.

Subjects of the present invention are not limited to the aforementioned subjects and still other subjects not described herein may be clearly understood by one of ordinary skill in the art from the following description.

### SOLUTION

To solve the aforementioned problems, there is provided a pedestrian route providing method and a pedestrian route providing system according to the present invention, including a user terminal configured to receive user information and departure and destination information; a pedestrian route providing unit configured to provide at least one optimal walking route from the departure to the destination to the user terminal; and a walkway information providing unit configured to provide walkway information data to the pedestrian route providing unit, and the pedestrian route providing unit is configured to provide the optimal walking route according to the user information to the user terminal based on the walkway information data.

Also, the user information may include presence or absence of disability, a type of disability, a disability assistance method, and presence or absence of an accompanying person.

Also, the disability assistance method may include a wheelchair, and the user terminal may be configured to receive input as to whether the wheelchair is manual or automatic.

Also, the walkway information data may include walkway status data representing data related to a fixed obstacle and facility on a walkway; walkway situation data representing data related to information generated according to a non-fixed obstacle on the walkway and human and environmental factors; and user travel route data representing travel route data collected based on a global positioning system (GPS) from the user terminal.

Also, the walkway status data may include road information data including information on the walkway on which a pedestrian is movable; building information data including information on a building present around the walkway; and facility information data including information on a facility and equipment installed on the walkway.

Also, the walkway situation data may include non-fixed obstacle data including information on an obstacle temporarily or periodically generated on the walkway; environmental information data including information related to an obstacle generated due to a weather environment and weather; and safety information data including information related to an accident that occurred around the walkway.

Also, the obstacle generated due to the weather environment may include freezing and flooding that temporarily occurred at a specific point on the walkway.

Also, the pedestrian route providing unit may include a walkway information collecting unit configured to collect raw data of the walkway information data from the walkway information providing unit; a processing unit configured to extract the walkway information data from the raw data; a determination unit configured to determine, based on the walkway information data, a walkability status of walkways present from the departure to the destination according to the user information; a route generation unit configured to generate at least one optimal walking route suitable for the user information from the departure to the destination based on the determination results; and a route providing unit configured to provide the at least one optimal walking route to the user terminal.

Also, when duplicate data is present in the extracted walkway information data and there is no difference in freshness, the processing unit may be configured to extract the walkway information data according to priority of the walkway information providing unit.

Also, the determination unit may be configured to set the user travel route data to the highest priority and to determine the walkability status.

Also, the walkway information providing unit may include a geographic information system (GIS) data collecting unit configured to collect GIS data that includes the walkway status data; a video record collecting unit including a closed circuit television (CCTV) installed on the walkway and a black box of a vehicle; an Internet of things (IoT) sensor data collecting unit including a smart pole and walkway facility installed around the walkway or an IoT device installed inside or outside a building; a social mapping data collecting unit configured to collect social mapping data from the user terminal; and a walking route collecting unit configured to collect GPS-based user travel route data from at least one user terminal.

Also, the social mapping data may include information on an image, a type, and a location of an obstacle.

Also, the priority of the walkway information providing unit may be set in order of the video record collecting unit, the social mapping data collecting unit, and the GIS data collecting unit with respect to the walkway information data excluding the environmental information data, and in the case of a blind spot on the walkway that is not collected by the video record collecting unit, the social mapping data collecting unit may be set to the highest priority, and in the case of the environmental information data, the IoT sensor data collecting unit may be set to the highest priority.

Also, the GIS data may include a node and a link, the link represents attribute information of a road, and the node is a point at which an attribute of the link varies.

Also, the attribute information of the road may include a highway, an automobile-only road, a bicycle-only way, a pedestrian-only sidewalk, a roadway, a sidewalk, 3 lanes, an intersection, and a mixed-use road for roadway and sidewalk.

Also, the attribute information of the road may include a slope of the road and presence or absence of Braille block.

A pedestrian route providing method according to the present invention refers to a pedestrian route providing method performed by a pedestrian route providing system, the pedestrian route providing method including a raw data collecting operation of collecting, from a walkway information providing unit, raw data that includes walkway information data; a walkway information data processing operation of extracting the walkway information data from the raw data; a user information and departure/destination information receiving operation of receiving user information and departure and destination information from a user terminal; a movability-status-on-walkway determining operation of determining a movability status of walkways present from the departure to the destination, based on the extracted walkway information data; an optimal walking route generating operation of generating at least one optimal walking route based on the determination results; and an optimal walking route providing operation of providing the at least one optimal walking route to the user terminal, and the movability-status-on-walkway determining operation determines whether it is possible to travel on a corresponding walkway according to the user information.

Also, the user information may include presence or absence of disability, a type of disability, a disability assistance method, and presence or absence of an accompanying person.

Also, the disability assistance method may include a wheelchair, and the user information receiving operation may receive input as to whether the wheelchair is manual or automatic from the user terminal.

Also, the walkway information data may include user travel route data representing travel route data collected based on a global positioning system (GPS) from the user terminal, and the movability-status-on-walkway determining operation may determine whether it is possible to travel on the walkway is possible by setting the user travel route data to the highest priority.

Also, the walkway information data processing operation may include a walkway information data extracting operation of extracting the walkway information data from the raw data; a data duplication determining operation of determining whether duplicate data is present in the extracted walkway information data; and a data freshness determining operation of extracting the most recent data when duplicated walkway information data is present in the data duplication determining operation.

Also, when there is no difference in freshness in the duplicate walkway information data, the data freshness determining operation may extract the walkway information data according to priority of the walkway information providing unit that provides the walkway information data to the pedestrian route providing unit.

Also, the walkway information data may include road information data, building information data, facility information data, non-fixed obstacle data, environmental information data, safety information data, and user travel route data, and the walkway information providing unit may include a geographic information system (GIS) data collecting unit configured to collect GIS data that includes the road information data, the building information data, and the facility information data; a video record collecting unit including a closed circuit television (CCTV) installed on the walkway and a black box of a vehicle; an Internet of things (IoT) sensor data collecting unit including a smart pole and walkway facility installed around the walkway or an IoT device installed inside or outside a building; a social mapping data collecting unit configured to collect social mapping data from the user terminal; and a walking route collecting unit configured to collect GPS-based user travel route data from at least one user terminal.

Also, the data freshness determining operation may set the priority of the walkway information providing unit in order of the video record collecting unit, the social mapping data collecting unit, and the GIS data collecting unit with respect to the walkway information data excluding the environmental information data, may set the social mapping data collecting unit to the highest priority in the case of a blind spot on the walkway that is not collected by the video record collecting unit, and may set the IoT sensor data collecting unit to the highest priority in the case of the environmental information data.

### EFFECT

According to a pedestrian route providing system and method of the present invention, one or more effects as follows are achieved.

First, by providing at least one optimal walking route suitable for a user's walking ability based on user information and walkway information data, even a wheelchair user and pedestrians with visual impairment may readily reach a destination from a departure.

Second, when walkway information data is classified into 7 types and duplicate walkway information data is received from walkway information providing units, it is possible to maximize accuracy and reliability of data by extracting the walkway information data according to priority of the walkway information providing units.

Third, by continuously collecting walkway information data from a plurality of walkway information providing units, it is possible to ensure high reliability and freshness of data.

Fourth, by collecting, from at least one user terminal, social mapping data that contains information, such as appearance, a type, and a location of an obstacle, it is possible to effectively verify presence of an obstacle even in a blind spot on a walkway that may not be captured by a closed-circuit television (CCTV) or a black box.

Fifth, although obstacle data related to a section is present, user travel route data may be collected from the corresponding section after a time at which the obstacle data is collected. In this case, since the corresponding section may be determined as walkable depending on a pedestrian type, accuracy and reliability of determining whether it is possible to travel on a walkway may be greatly improved.

Effects of the present invention are not limited to the aforementioned effects and still other effects not described herein may be clearly understood by one of ordinary skill in the art from the description of the claims.

### BRIEF DESCRIPTION OF DRAWINGS

FIG. 1 illustrates a pedestrian route providing system according to an example embodiment of the present invention.
FIG. 2 is a block diagram illustrating a pedestrian route providing system according to an example embodiment of the present invention.
FIG. 3 is a diagram illustrating walkway information data and a walkway information layer according to an example embodiment of the present invention.
FIG. 4 illustrates a display method of a walkway information layer according to an example embodiment of the present invention.
FIG. 5 illustrates a social mapping data collecting unit according to an example embodiment of the present invention.
FIG. 6 is a flowchart illustrating a pedestrian route providing method according to an example embodiment of the present invention.
FIG. 7 is a flowchart illustrating a detailed operation of a walkway information data processing operation according to an example embodiment of the present invention.
FIGS. 8 and 9 illustrate geographic information system (GIS) data according to an example embodiment of the present invention.

### BEST MODE

Advantages and features of the present invention and methods to achieve the same will become clear with reference to example embodiments described in detail along with the accompanying drawings. However, the present invention is not limited to example embodiments disclosed blow and may be implemented in various forms. Here, the example embodiments are provided to make the disclosure of the present invention complete and to fully inform one of ordinary skill in the art to which the present invention pertains of the scope of the present invention and the present invention is defined by the scope of the claims. Like reference numerals refer to like elements throughout the present specification.

Sizes or shapes of components illustrated in the drawings attached herein may be exaggerated for clarity and convenience of description. It should be noted that the same component is indicated by the same reference numeral in each drawing. Also, detailed description related to a function and a configuration of the known art that is determined to make the gist of the present invention unnecessarily ambiguous may be omitted.

Terms used herein are used to explain a specific example embodiment and are not construed to limit the present invention. As used herein, the singular form may include the plural form unless the context clearly indicates otherwise. Also, when a portion "includes" a certain component throughout the present specification, it represents that it may further include another component unless specifically stated otherwise.

When it is described that a component is "connected to" or "accessed to" another component, it should be understood that the component may be directly connected to or accessed to the other component and that an intervening component may be present therebetween. On the contrary, when a component is "directly connected to" or "directly accessed to" another component, it should be understood that there is no intervening component therebetween. Other expressions for describing relationship between components should be interpreted similarly.

Terms, such as top, bottom, upper surface, lower surface, upper portion, lower portion, etc., used herein are used to distinguish relative locations of components. For example, for convenience, when an upper part of the drawing is referred to as an upper portion and a lower part of the drawing is referred to as a lower portion, the upper portion may be referred to as the lower portion and the lower portion may be referred to as the upper portion without departing from the scope of the present invention.

Terms including ordinal numbers, such as "first," "second," etc., described herein may be used to explain various components, but the components are not limited by the terms. The terms are only used to distinguish each of the components from another component and are not limited by manufacturing order and names may not match in the detailed description and the claims of the invention.

Unless otherwise defined, all terms including technical and scientific terms used herein have the same meaning as commonly understood by one of ordinary skill in the art to which the present invention pertains. Terms, such as those defined in commonly used dictionaries, should be interpreted as having a meaning that is consistent with their meaning in the context of the relevant art and/or this disclosure, and should not be interpreted in an idealized or overly formal sense unless expressly so defined herein.

Hereinafter, the present invention is described with reference to the accompanying drawings to explain a pedestrian route providing system and method according to example embodiments of the present invention.

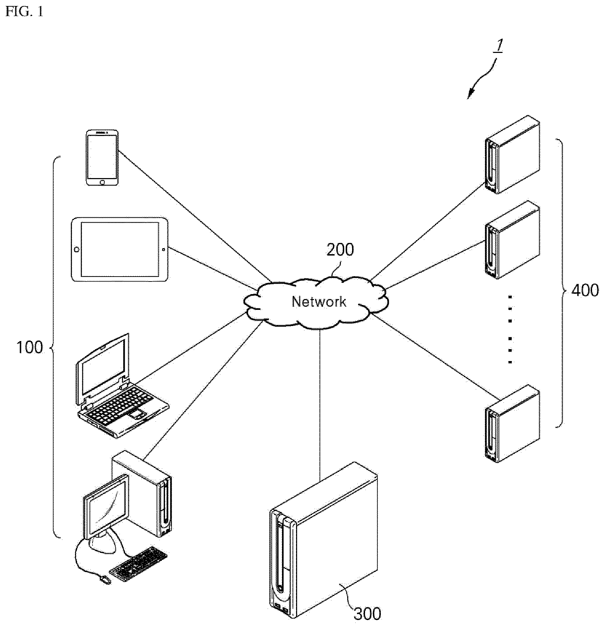

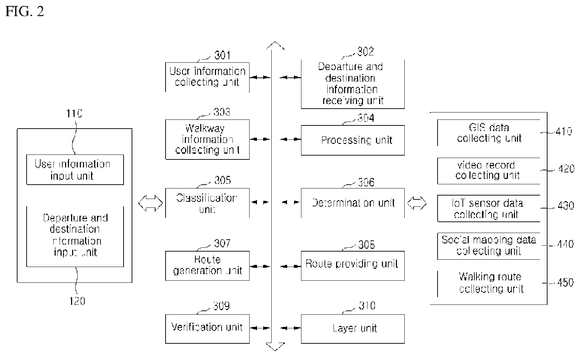

FIG. 1 illustrates a pedestrian route providing system according to an example embodiment of the present invention, and FIG. 2 is a block diagram illustrating a pedestrian route providing system according to an example embodiment of the present invention.

Referring to FIG. 1, a pedestrian route providing system 1 according to an example embodiment of the present invention may include a user terminal 100, a pedestrian route providing unit 300, and a walkway information providing unit 400.

Here, the respective components of FIG. 1 are connected through a network 200. For example, as shown in FIG. 1, the user terminal 100 may be connected to the pedestrian route providing unit 300 through the network 200. The pedestrian route providing unit 300 may be connected to the user terminal 100 and the walkway information providing unit 400 through the network 200. Also, the walkway information providing unit 400 may be connected to the pedestrian route providing unit 300 through the network 200.

Here, the network 200 refers to a connection structure that allows information exchange between nodes, such as a plurality of terminals and servers. Examples of the network 200 include radio frequency (RF), a 3rd Generation Partnership Project (3GPP) network 200, a Long Term Evolution (LTE) network 200, a Srd Generation Partnership Project (SGGP) network 200, a World Interoperability for Microwave Access (WIMAX) network, the Internet, a local area network (LAN), a wireless local area network (WLAN), a wide area network (WAN), a personal area network (PAN), a Bluetooth network 200, an NFC network 200, a satellite broadcasting network 200, an analog broadcasting network 200, a digital multimedia broadcasting (DMB) network 200, etc., but are not limited thereto.

The user terminal 100 may refer to a terminal that receives an optimal walking route suitable for a user using a webpage, an app page, a program, or an application related to a pedestrian route providing service.

Referring to FIG. 2, the user terminal 100 according to an example embodiment of the present invention may include a user information input unit 110 and a departure and destination information input unit 120.

The user information input unit 110 may receive user information from a user and may transmit the same to the pedestrian route providing unit 300.

Here, the user information entered at the user terminal 100 relates to the user's walking ability and refers to information including physical information such as gender, age, presence or absence of disability, and a type of disability, a disability assistance method including a wheelchair or a cane and a guide dog, and presence or absence of an accompanying person, and input such that an appropriate available walking route may be provided to the user. Here, since whether a pedestrian is capable of moving on a steep walkway may vary depending on whether the wheelchair is manual or automatic, it is desirable to receive information on a type of the wheelchair (manual, automatic).

That is, even on the same walkway, whether the pedestrian may move, that is, travel on the walkway may vary depending on the pedestriaris physical information, disability assistance method, and presence or absence of the accompanying person. Therefore, the optimal walking route may be recommended to the user terminal 100 based on the user information.

The departure and destination information input unit 120 may receive, from the user, location information of a departure and a destination for which a walking route is to be provided from the pedestrian route providing unit 300.

Here, the user terminal 100 may be implemented as a computer accessible to a remote server or terminal through the network 200. Here, the computer may include, for example, a navigation, a laptop computer equipped with web browser, a desktop computer, a laptop, and the like. Here, the user terminal 100 may be implemented as a terminal accessible to a remote server or terminal through the network 200. The user terminal 100 refers to, for example, a wireless communication device that ensures portability and mobility and may include any type of handheld-based wireless communication devices, for example, navigation, a personal communication system (PCS), Global System for Mobile communications (GSM), a personal digital cellular (PDC), a personal handyphone system (PHS), a personal digital assistant (PDA), International Mobile Telecommunication (IMT)-2000, code division multiple access (CDMA)-2000, W-code division multiple access (W-CDMA), a wireless broadband Internet (WiBro) terminal, a smartphone, a smartpad, and a tablet PC.

The pedestrian route providing unit 300 may provide at least one optimal walking route from the departure to the destination to the user terminal.

The pedestrian route providing unit 300 according to an example embodiment of the present invention may include a user information collecting unit 301, a departure and destination information receiving unit 302, a walkway information collecting unit 303, a processing unit 304, a classification unit 305, a determination unit 306, a route generation unit 307, a route providing unit 308, a verification unit 309, and a layer unit 310.

The user information collecting unit 301 may collect, from the user information input unit 110, user information that relates to the user's walking ability and includes physical information such as gender, age, presence or absence of disability, and a type of disability, a disability assistance method such as a wheelchair or a cane, and a guide dog, and presence or absence of accompanying person. An optimal walking route suitable for a pedestrian type may be provided to the user terminal 100 based on the user information.

The departure and destination information receiving unit 302 may receive, from the departure and destination information input unit 120, location information of the departure and the destination for which the optimal walking route is to be provided. The departure and destination information receiving unit 302 may determine whether a corresponding pedestrian is capable of moving on a walkway present in a route between the received departure and destination and an optimal walking route according thereto may be provided to the user terminal 100.

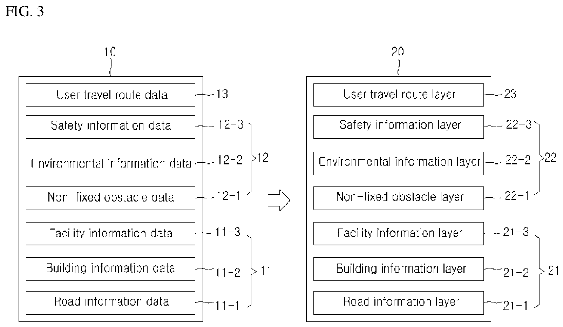

FIG. 3 is a diagram illustrating walkway information data and a walkway information layer according to an example embodiment of the present invention.

Referring to FIG. 3, the walkway information collecting unit 303 may collect raw data of walkway information data 10.

The walkway information data may include walkway status data 11, walkway situation data 12, and user travel route data.

The walkway status data 11 relates to a fixed obstacle and facility on the walkway and may include road information data 11-1, building information data 11-2, and building information data 11-3.

The road information data 11-1 relates to information data on the walkway on which a pedestrian may move, including a road, a sidewalk, a road for roadway and sidewalk, and a side street, and may include a damaged state of the walkway or a damaged state of Braille block, a location of a crosswalk, and floating population information on the walkway.

The building information data 11-2 relates to information data on a building, such as a commercial store and a house, and may include information of the building itself, such as a location, floor information, and an entrance location of the building, and information capable of determining whether a person with disability is accessible to the building, such as presence or absence of facility for the disabled (e.g., restroom, dedicated escalator, etc.), availability of an elevator, a shape of a building entrance, and whether a wheelchair may pass through, may verify entrance information of the building, and may provide a walking route later by crossing the building's entrance.

The building information data 11-3 may include information on facilities or equipment installed on the walkway for public purposes, such as a street light, a bollard, a traffic light, and a bicycle rack.

The walkway situation data 12 relates to information generated according to a non-fixed obstacle on the walkway and human and environmental factors, and may include non-fixed obstacle data 12-1, environmental information data 12-2, and safety information data 12-3.

The non-fixed obstacle data 12-1 relates to a mobile obstacle on the walkway and may include information on an obstacle that causes difficulty in walking, which occurs temporarily or periodically on the walkway, such as illegal parking and trash.

The environmental information data 12-2 may include information on an obstacle caused by a weather environment, such as freezing or flooding on the walkway, and may include weather information, such as fine dust, temperature, and wind.

The safety information data 12-3 may include information on safety and may include information, such as information on a building visited by a person infected with coronavirus and an accident that occurred on the walkway.

The user travel route data 13 may be collected based on a global positioning system (GPS) from at least one user terminal 100 in a walking route collecting unit 450, which is described below. If the user travel route data 13 is present, a user corresponding thereto may be determined to be movable on all walkways present in corresponding travel route data and may be assigned the highest priority among the walkway information data 10. Further description related thereto will be made below.

Also, the user travel route data 13 may be collected in a form of a node and a link. Here, the node represents GPS coordinates and the link represents a line that connects nodes. Further description related thereto will be made below.

The processing unit 304 may extract the aforementioned walkway information data 10 from the raw data collected by the walkway information collecting unit 303.

Here, since the walkway information data 10 is collected from a plurality of collecting units of the walkway information providing unit 400, the processing unit 304 may determine whether duplicate data is present in the extracted walkway information data 10. If the duplicate data is absent, the walkway information data 10 extracted by the classification unit 305 to be described below may be classified for each characteristic in the walkway information layer 20 to be described below.

Here, when the duplicate data is present, freshness of data may be determined. When there is a difference in collection time, data collected in a previous time may be deleted and the most recent data may be used. However, when the duplicate data is collected at the same time, that is, when there is no difference in freshness between the duplicate data, data may be used according to preset priority. Further description related thereto will be made below.

The classification unit 305 may classify the extracted walkway information data 10 for each characteristic in the walkway information layer 20 to be described below.

The determination unit 306 may determine whether a corresponding user according to a pedestrian type may travel on the walkway based on the walkway information data 10 stored for each walkway information layer 20.

That is, when user information and departure and destination information are received from the user terminal 100, the determination unit 306 may determine whether it is possible to travel on the walkway based on the user information among a large number of routes between the departure and the destination.

Here, the determination unit 306 may determine whether the corresponding pedestrian may travel on the walkway by setting the user travel route data to the highest priority. Further description related thereto will be made below.

The route generation unit 307 may generate at least one optimal walking route suitable for the pedestrian type from the departure to the destination based on determination results of the determination unit 306. The at least one optimal walking route corresponds to a route through which a corresponding user provided with the optimal walking route is walkable.

The route providing unit 308 may provide the at least one optimal walking route to the user terminal 100.

That is, by providing at least one optimal walking route suitable for walking ability of a corresponding user based on a plurality of pieces of user information and walkway information data, a wheelchair user and pedestrians with visual impairment may easily and readily reach the destination from the departure based on the optimal walking route.

When the verification unit 309 provides a walkable route to the user terminal 100 and then receives negative feedback data from the user terminal 100 regarding the appropriateness of the provided walkable route, the verification unit 309 may perform error verification on the provided walkable route to identify an error part and the cause of an error, may update the error part and the cause of the error to a server and then may perform deep learning using an artificial neural network to find an error pattern and to predict an error rate through classification, and may reflect data derived from deep learning to the server.

As shown in FIG. 3, the layer unit 310 may generate the walkway information layer 20 for each characteristic of the walkway information data 10.

That is, the walkway information layer 20 may include a walkway state layer 21, a walkway situation layer 22, and a user travel route layer 23.

The walkway state layer 21 may include a road information layer 21-1, a building information layer 21-2, and a facility information layer 21-3.

The walkway situation layer 22 may include a non-fixed obstacle layer 22-1, an environmental information layer 22-2, and a safety information layer 22-3.

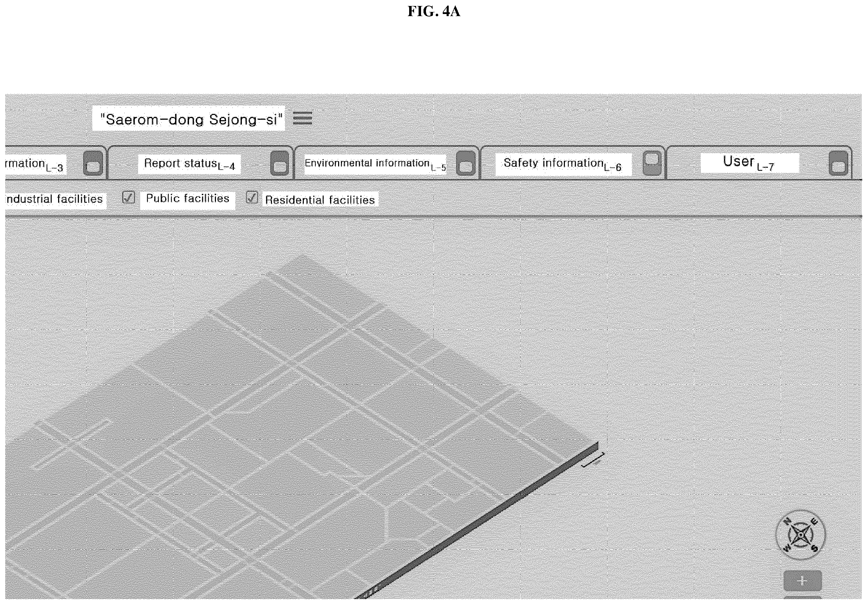

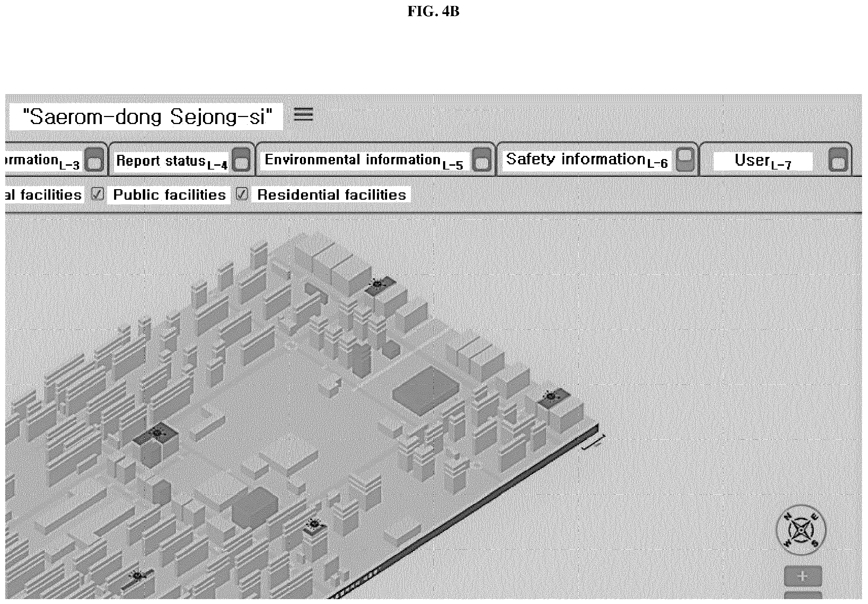

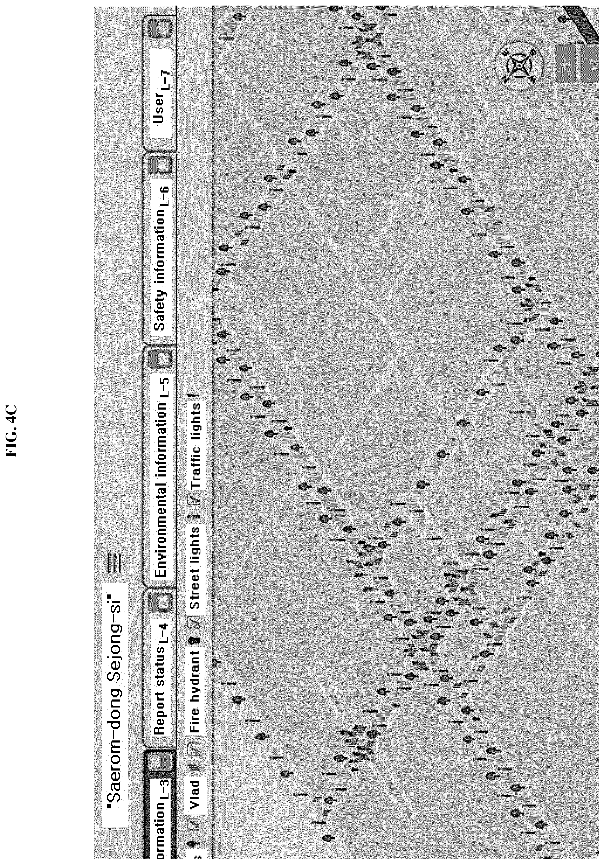

FIG. 4 illustrates a display method of a walkway information layer according to an example embodiment of the present invention.

Referring to FIG. 4, walkway information may be effectively provided by selectively displaying seven layers included in the walkway information layers 20 on a map related to a pedestrian route providing service of the user terminal 100.

For example, only the road information layer 21-1 may be displayed on the map as shown in FIG. 4A, and only the building information layer 21-2 may be displayed on the map as shown in FIG. 4B. Also, as shown in FIG. 4C, the road information layer 21-1 and the facility information layer 21-3 may be displayed on the map.

Whether a corresponding user according to a pedestrian type may travel on the walkway from the departure to the destination may be determined based on the walkway information data 10 classified into the respective layers included in the walkway information layer 20.

Here, the pedestrian route providing unit 300 may be implemented as a computer connectable to a remove server or terminal through the network 200. Here, the computer may include, for example, a navigation, a notebook equipped with web browser, a desktop, and a laptop.

Referring to FIG. 2, the walkway information providing unit 400 according to an example embodiment of the present invention may include a geographic information system (GIS) data collecting unit 410, a video record collecting unit 420, an Internet of things (IoT) sensor data collecting unit 430, a social mapping data collecting unit 440, and a walking route collecting unit 450. However, types thereof are not limited thereto and a list may increase or be modified depending on example embodiments or in response to a change in collected data.

The GIS data collecting unit 410 may include geographic information system data, that is, GIS data. The GIS data may include the road information data 11-1, the building information data 11-2, and the building information data 11-3.

Here, the GIS data may be divided into public GIS data acquired from a public institution and self-GIS data autonomously produced.

In the case of the public GIS data, an update cycle may differ for each management institution. Since update is mainly performed semi-annually or annually, reliability of a data source is high but freshness of data is low. The self-GIS data may be produced based on data that may not be acquired from the public GIS data and may be produced as needed so there is a limit in the scope. However, since freshness is superior to the public GIS data, high reliability and freshness may be secured by acquiring GIS data through combination of the public GIS data and the self-GIS data.

The video record collecting unit 420 may collect video data of the walkway from CCTVs installed through the walkway or from black boxes of vehicles parked around the walkway and may also collect video data in a form of image data.

Here, the video data may be collected by collecting a video being shot in real time or by receiving recorded video later. In the latter case, freshness may be determined by the processing unit 304, which will be described below, based on a video recording time rather than a time at which the video is delivered.

The IoT sensor data collecting unit 430 may collect a variety of data capable of complementing image data through a smart pole (S-pole) installed on the road and facility on the walkway or an IoT device installed inside and outside a building.

For example, the IoT sensor data collecting unit 430 may collect the surrounding road information data 11-1 through a sensor installed on a smart crosswalk. Also, the IoT sensor data collecting unit 430 may collect the building information data 11-2 through a sensor attached to facility inside a building and an IoT device, may collect the non-fixed obstacle data 12-1 on the walkway from a sensor attached to a bicycle on the walkway and a bicycle rack, and may collect the environmental information data 12-2 including fine dust, temperature, and wind volume through an IoT sensor attached to a smart pole (S-pole).

Here, the IoT sensor data may be collected in an S.I. or API form.

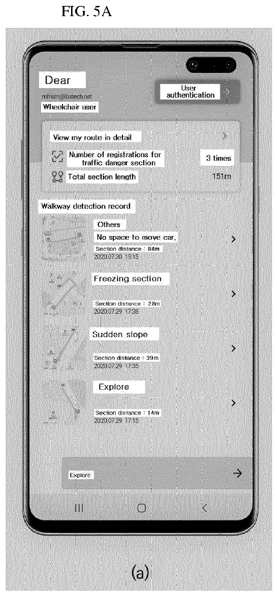

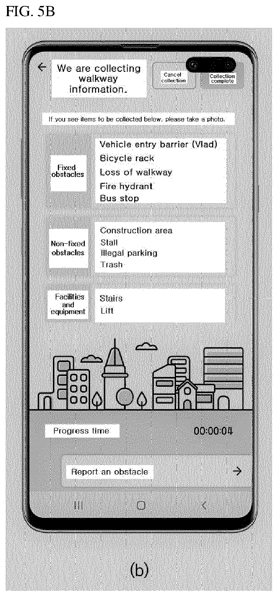

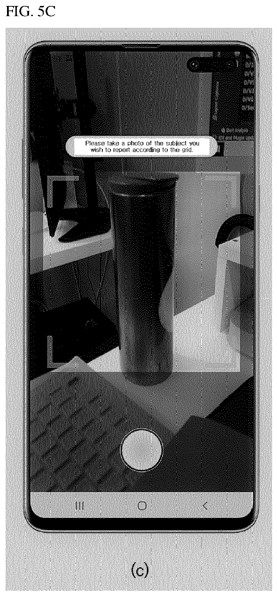

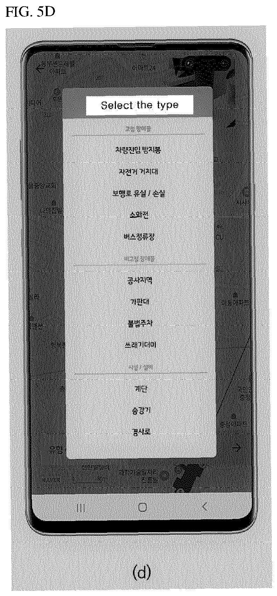

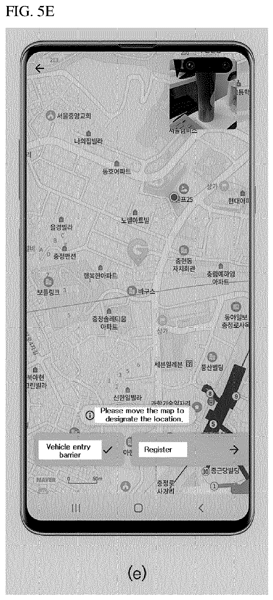

FIG. 5 illustrates a social mapping data collecting unit according to an example embodiment of the present invention.

The social mapping data collecting unit 440 may collect social mapping data from the user terminal 100. The social mapping data may include all of the walkway information data 10.

Here, the social mapping data refers to image data collected from at least one user terminal 100 and, as shown in FIG. 5, information on a status or a situation that causes an obstacle when a pedestrian is walking may be captured and a captured photo may be uploaded on a webpage, an app page, a program, or an application related to a pedestrian route providing service of the user terminal 100 with a type of the obstacle. Also, information on the obstacle may be automatically registered or may be manually registered by an administrator on the webpage, the app page, the program, or the application related to the pedestrian route providing service of the user terminal 100.

That is, by collecting social mapping data that contains information, such as appearance (image), a type, and a location of an obstacle, from at least one user terminal 100, presence of the obstacle may be effectively identified even in a blind spot that is not captured by a CCTV or a black box.

The walking route collecting unit 450 may collect the GPS-based user travel route data 17 from the at least one user terminal 100. Whether it is possible to travel on the walkway may be more effectively determined by collecting the user travel route data 13.

For example, although there is no walkway information data 10 at all for a specific section on the walkway, the user travel route data 13 may be present and in this case, the corresponding section may be determined to be walkable.

Here, whether a user provided with a walking route may move in a corresponding section may be determined based on user information that provides the user travel route data 13. Further description related thereto is made below.

The aforementioned components of the pedestrian route providing system 1 according to the present invention may be implemented as hardware that includes an integrated circuit specified for at least one signal processing or application, software, or combination of hardware and software. The terms "-unit" and "-er/or", etc., used herein represents a unit of processing at least one function or operation, which may be implemented as hardware or software or combination of hardware and software.

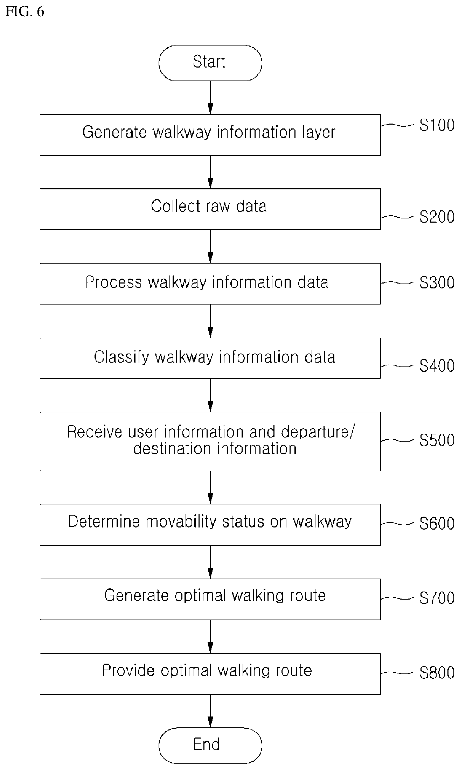

Hereinafter, a pedestrian route providing method according to an example embodiment of the present invention will be described with reference to FIG. 6.

FIG. 6 is a flowchart illustrating a pedestrian route providing method according to an example embodiment of the present invention.

The method of FIG. 6 may be performed by the pedestrian route providing unit 300 according to an example embodiment of the present invention shown in FIG. 2. Therefore, further description related to the pedestrian route providing unit 300 and the pedestrian route providing system 1 including the same are made above with reference to FIGS. 1 to 5 and thus, further description may be omitted.

Referring to FIG. 6, the pedestrian route providing method according to an example embodiment of the present invention may include a walkway information layer generating operation (S100), a raw data collecting operation (S200), a walkway information data processing operation (S300), a walkway information data classifying operation (S400), a user information and departure/destination information receiving operation (S500), a movability-status-on-walkway determining operation (S600), an optimal walking route generating operation (S700), and an optimal walking route providing operation (S800).

In the walkway information layer generating operation (S 100), the walkway information layer 20 may be generated for each characteristic of the walkway information data 10 as shown in FIG. 3.

In the raw data collecting operation (S200), raw data of the walkway information data 10 may be collected from the walkway information providing unit 400.

In the walkway information data processing operation (S300), the walkway information data 10 may be extracted from the raw data collected from the walkway information providing unit 400.

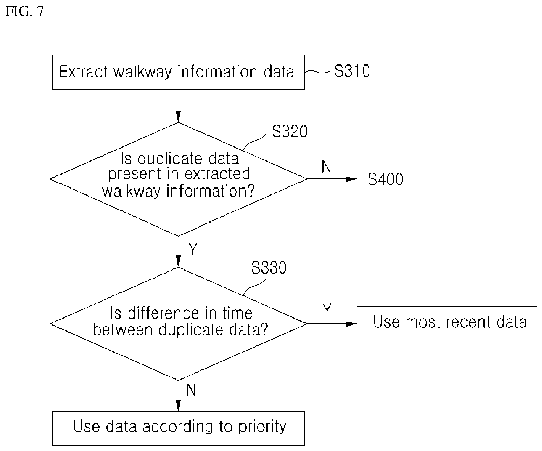

FIG. 7 is a flowchart illustrating a detailed operation of a walkway information data processing operation according to an example embodiment of the present invention.

Referring to FIG. 7, the walkway information data processing operation (S300) according to an example embodiment of the present invention may include a walkway information data extracting operation (S310), a data duplication determining operation (S320), and a data freshness determining operation (S330).

In the walkway information data extracting operation (S310), the walkway information data 10 including the road information data 11-1, the building information data 11-2, the building information data 11-3, the non-fixed obstacle data 12-1, the environmental information data 12-2, the safety information data 12-3, and the user travel route data 13 for determining whether it is possible to travel on the walkway may be extracted from the raw data.

In the data duplication determining operation (S320), since the walkway information data 10 is collected from a plurality of collecting units of the walkway information providing unit 400, whether duplicate data is present in the extracted walkway information data 10 is determined. If the duplicate data is absent, the extracted walkway information data 10 may be classified for each characteristic in the walkway information layer 20 in the walkway information data classifying operation (S400) to be described below.

In the data freshness determining operation (S330), when duplicate data is present in the data duplication determining operation (S320), freshness of the extracted walkway information data 10 may be determined. When there is a difference in collection time, data collected in a previous time may be deleted and the most recent data may be used. However, when the duplicate data is collected at the same time, that is, when there is no difference in freshness between the duplicate data, data may be used according to the preset priority of the walkway information providing unit.

According to an example embodiment of the present invention, GIS data may be used as basic data for the road information data 11-1, the building information data 11-2, and the building information data 11-3 in the walkway information data 10, and here, the GIS data collecting unit may be assigned the lowest priority since the GIS data collecting unit holds a different type of data by region, a difference may occur due to different center coordinates, and an update cycle is slow. The video record collecting unit, such as a CCTV, is capturing a specific section in real time and accordingly, has high reliability and may be assigned the highest priority. Also, in the case of a point, that is, a blind spot on the walkway in which walkway information data may not be collected through a CCTV, such as alleys that are not captured on the CCTV on the walkway, walkway information data may be acquired from social mapping data. Therefore, in the case of the blind spot on the walkway in which it is impossible to collect the walkway information data from the video record collecting unit, the highest priority may be assigned to the social mapping data collecting unit. The IoT sensor data collecting unit may be assigned the highest priority for environmental information data, but it may be changed depending on situations, purposes, and necessity, and is not limited thereto.

That is, in the data freshness determining operation (S330), when walkway information data corresponding to road information data, building information data, facility information data, non-fixed obstacle data, and safety information data, excluding environmental information data, is duplicated and collected simultaneously from the walkway information providing unit, data may be extracted in order of the video record collecting unit, the social mapping data collecting unit, and the GIS data collecting unit. In the case of a walkway blind spot in which data is not collected by the video record collecting unit, when extracting data, the social mapping data collecting unit may be set to the highest priority. In the case of the environmental information data, when extracting data, the IoT sensor data collecting unit may be set to the highest priority.

For example, the walkway information collecting unit may receive, from the GIS data collecting unit, raw data A in which non-fixed obstacle data a is included at a specific point on the walkway and, at the same time, may collect, from the video record collecting unit, raw data B in which the non-fixed obstacle data a is not included at the specific point. Here, although the raw data A received from the GIS data collecting unit is received at the same time with the raw data B, actual data may have been generated earlier than the raw data B and thus, may be less accurate and up-to-date than the raw data B. The accuracy and reliability of data may be significantly improved by extracting data that does not include the non-fixed obstacle data a collected from the highestpriority video record collecting unit as the non-fixed obstacle data.

Also, although environmental information data about freezing is not acquired from the video record collecting unit for the specific point on the walkway, environmental information data about freezing for the specific point may be received in environmental information data acquired from the IoT sensor data collecting unit. In this case, the environmental information data may be extracted as that freezing has occurred.

In the walkway information data classifying operation (S400), the extracted and processed walkway information data 10 may be classified for each characteristic in the walkway information layer 20.

For example, the road information data 11-1, the building information data 11-2, and the building information data 11-3 that include road location, building size and shape information, and facility information, such as a street light and an electric pole, collected from the GIS data, may be classified and stored in the road information layer 21-1, the building information layer 21-2, and the facility information layer 21-3, respectively.

Also, the non-fixed obstacle data 12-1, such as illegal garbage discharge and illegal parking on the walkway, collected through a CCTV may be classified into the non-fixed obstacle layer 22-1 and the environmental information data 12-2, such as a freezing section or a standing water section on the walkway from the CCTV, may be classified into the environmental information layer 22-2.

In the user information and departure/destination information receiving operation (S500), user information that includes physical information, such as gender, age, presence or absence of disability, and a type of disability, a disability assistance method including a wheelchair or a cane and a guide dog, and presence or absence of an accompanying person may be collected from the user terminal 100 as the walking ability of the user. An optimal walking route suitable for a pedestrian type based on the user information may be provided to the user terminal 100.

Also, location information of the departure and the destination may be received from the user terminal 100. Whether a corresponding pedestrian may travel on walkways present from the departure to the destination may be determined and an optimal walking route according thereto may be provided to the user terminal 100.

In the movability-status-on-walkway determining operation (S600), when the user information and the departure and destination information are received from the user terminal 100, whether a corresponding user may travel on walkways present from the departure to the destination may be determined based on the user information and the walkway information data 10.

For example, if the user is an ordinary person without disability, it may be determined the user may move through all routes except for special cases, such as an area in which an accident has occurred and an area visited by a person infected with coronavirus.

Also, if the user is visually impaired, it may be determined that the user may walk in a section with Braille block and a section without Braille block or a damaged section may be determined to be unwalkable for the visually impaired user.

Also, if the user is a wheelchair user, a point through which a wheelchair may not pass due to a narrower width of the walkway or building entrance than that of the wheelchair and a sloping section in which the slope is too high for the wheelchair to climb may be determined to be impossible to walk.

Here, if the user is a wheelchair user, whether the user may travel on the walkway may be determined depending on whether the wheelchair is automatic (electric) or manual. Even in the same sloping section, there is a section in which a manual wheelchair may not climb, but an automatic (electric) wheelchair may climb. Therefore, a movability status on the walkway may be determined based on a wheelchair type by determining a difficulty level of the slope.

Also, in the case of the disabled and the elderly, if a plurality of walking routes is present between the departure and the destination, a route with pedestrian road facilities, such as a pedestrian-only sidewalk, a crosswalk, a non-ramp road, and a pedestrian lift, may be preferentially provided to the user.

Also, in the case of a disabled person, the movability status on the walkway may vary depending on whether an accompanying person is present. If the accompanying person is present, a visually impaired person may travel on a route that he or she may not travel alone or with only a wheelchair, with the help of the accompanying person. Therefore, whether the disabled person may travel on the walkway may be determined by considering presence or absence of the accompanying person.

Here, in the movability-status-on-walkway determining operation (S600), whether the user provided with a walking route may travel in a corresponding section may be determined based on the user information corresponding the provided user travel route data 13.

For example, if the user travel route data 17 of the wheelchair user is present for point A, and if no data that interferes with walking occurs at point A until a point in time of determining whether the corresponding user may travel on the walkway, all the pedestrians similar to information of the user that provides the travel route data may be determined to be walkable at point A.

That is, as long as there is route data used for the user to travel for a specific section, whether a user similar to the user having provided the travel route data may travel on the walkway may be determined even without the other walkway information data 10. Therefore, high reliability and accuracy may be secured in determining a walkability status.

Therefore, in the movability-status-on-walkway determining operation (S600), whether it is possible to travel on the walkway may be determined based on a pedestrian type by setting the user travel route data to the highest priority.

Although at least one type of data among the remaining six types of walkway information data 10 excluding the user travel route data 13 is unsecured or although an error occurs due to a problem such as communication or update cycle, if the user travel route data 13 is present for a certain section, it may be determined that a pedestrian corresponding to the user may walk in the corresponding section.

For example, in a case in which section A unavailability data was collected as the road information data 11-1 on July 13, 2021 and the section A unavailability data was present until 10 a.m. on July 14, 2021 that is a subsequent point in time of determining whether it is possible to travel on the walkway, if the user travel route data 17 of the wheelchair user is present for section A at 8 a.m. on July 14, 2021, the general public and wheelchair users may be determined to be able to travel in section A by considering the user travel route data 13 as the top priority although section A availability data is not collected.

That is, although obstacle data related to a certain section is present, if the user travel route data 13 related to the corresponding section is collected after a time at which the obstacle data is collected, the corresponding section may be determined to be available depending on a pedestrian type. Therefore, accuracy and reliability may be significantly improved in determining whether it is possible to travel on the walkway.

In the optimal walking route generating operation (S700), at least one optimal walking route suitable for a pedestrian type from the departure to the destination may be generated based on determination results of the movability-status-on-walkway determining operation (S600).

In the optimal walking route providing operation (S800), the at least one optimal walking route may be provided to the user terminal 100.

That is, by providing at least one optimal walking route suitable for the walking ability of the user based on the user information and the walkway information data, a wheelchair user and pedestrians with visually impairment may easily and readily travel from the departure to the destination.

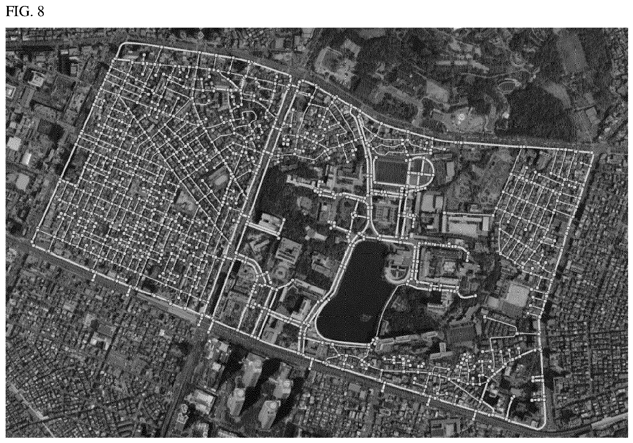

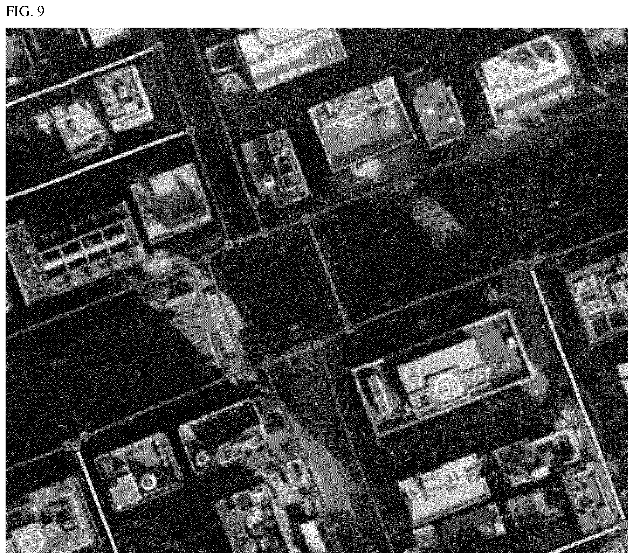

FIGS. 8 and 9 illustrate geographic information system (GIS) data according to an example embodiment of the present invention.

Meanwhile, according to an example embodiment of the present invention, the GIS data may include a node and a link as shown in FIGS. 8 and 9.

The link may represent attribute information of road that includes a highway, an automobile-only road, a bicycle-only way, a pedestrian-only sidewalk, a roadway, a sidewalk, 3 lanes, an intersection, and a mixed-use road for roadway and sidewalk. Here, the road may represent a walkway in broad sense including even the automobile-only road. Also, the link may include attribute information of the road, such as a slope of the road and presence or absence of Braille block. That is, a different attribute value may be present for each link.

The node may be displayed at each point at which an attribute of the link varies. Also, the node may be distinguishably marked at a portion that requires an additional guidance in a route guidance, such as a crossroad or a crosswalk. The direction and route guidance of the road are different based on the node and each node may have a differentiated attribute value. For example, a node at an intersection and a node ahead of a crosswalk may be displayed in color different from a normal node color.

Also, referring to FIG. 9, links may be distinguishably colored for each attribute of road, such as purple for a walkway, red for a crosswalk, and light green for a mixed-use road for roadway and sidewalk, but the colors are not limited thereto.

The methods according to the example embodiments may be configured in a form of program instructions performed through various computer devices and recorded in computerreadable recording media. The media may also include, alone or in combination with the program instructions, data files, data structures, and the like. The program instructions recorded in the media may be specially designed and configured for the example embodiments or may be known to those skilled in the computer software art and thereby available. Examples of the media include magnetic media such as hard disks, floppy disks, and magnetic tapes; optical media such as CD-ROM and DVDs; magneto-optical media such as floptical disks; and hardware devices that are specially configured to store program instructions, such as read-only memory (ROM), random access memory (RAM), flash memory, and the like. Examples of program instructions include both a machine code, such as produced by a compiler, and files containing a higher level code that may be executed by the computer using an interpreter. The hardware device may be configured to operate as at least one software module, or vice versa.

As described above, although example embodiments of the present invention are illustrated and described with reference to the drawings, the present invention is not limited to the aforementioned specific embodiments and it should be understood that various modifications may be made by one of ordinary skill in the art without departing from the scope of the claims and such modifications should not be understood individually from the technical spirit or view of the present invention.

### INDUSTRIAL APPLICABILITY

The present invention may be industrially applicable in the field of navigation technology for a self-driving robot, such as a route guidance and a delivery robot for wheelchair users and the visually impaired.

## Claims

1. A pedestrian route providing system comprising:
a user terminal configured to receive user information and departure and destination information;
a pedestrian route providing unit configured to provide at least one optimal walking route from the departure to the destination to the user terminal; and
a walkway information providing unit configured to provide walkway information data to the pedestrian route providing unit,
wherein the pedestrian route providing unit is configured to provide the optimal walking route according to the user information to the user terminal based on the walkway information data.

2. The pedestrian route providing system of claim 1, wherein the user information includes presence or absence of disability, a type of disability, a disability assistance method, and presence or absence of an accompanying person.

3. The pedestrian route providing system of claim 2, wherein the disability assistance method includes a wheelchair, and
the user terminal is configured to receive input as to whether the wheelchair is manual or automatic.

4. The pedestrian route providing system of claim 1, wherein the walkway information data includes:
walkway status data representing data related to a fixed obstacle and facility on a walkway;
walkway situation data representing data related to information generated according to a non-fixed obstacle on the walkway and human and environmental factors; and
user travel route data representing travel route data collected based on a global positioning system (GPS) from the user terminal.

5. The pedestrian route providing system of claim 4, wherein the walkway status data includes:
road information data including information on the walkway on which a pedestrian is movable;
building information data including information on a building present around the walkway;
and
facility information data including information on a facility and equipment installed on the walkway.

6. The pedestrian route providing system of claim 4, wherein the walkway situation data includes:
non-fixed obstacle data including information on an obstacle temporarily or periodically generated on the walkway;
environmental information data including information related to an obstacle generated due to a weather environment and weather; and
safety information data including information related to an accident that occurred around the walkway.

7. The pedestrian route providing system of claim 6, wherein the obstacle generated due to the weather environment includes freezing and flooding that temporarily occurred at a specific point on the walkway.

8. The pedestrian route providing system of claim 2, wherein the pedestrian route providing unit includes:
a walkway information collecting unit configured to collect raw data of the walkway information data from the walkway information providing unit;
a processing unit configured to extract the walkway information data from the raw data;
a determination unit configured to determine, based on the walkway information data, a walkability status of walkways present from the departure to the destination according to the user information;
a route generation unit configured to generate at least one optimal walking route suitable for the user information from the departure to the destination based on the determination results; and
a route providing unit configured to provide the at least one optimal walking route to the user terminal.

9. The pedestrian route providing system of claim 8, wherein, when duplicate data is present in the extracted walkway information data and there is no difference in freshness, the processing unit is configured to extract the walkway information data according to priority of the walkway information providing unit.

10. The pedestrian route providing system of claim 8, wherein the determination unit is configured to set the user travel route data to the highest priority and to determine the walkability status.

11. The pedestrian route providing system of claim 5, wherein the walkway information providing unit includes:
a geographic information system (GIS) data collecting unit configured to collect GIS data that includes the walkway status data;
a video record collecting unit including a closed circuit television (CCTV) installed on the walkway and a black box of a vehicle;
an Internet of things (IoT) sensor data collecting unit including a smart pole and walkway facility installed around the walkway or an IoT device installed inside or outside a building;
a social mapping data collecting unit configured to collect social mapping data from the user terminal; and
a walking route collecting unit configured to collect GPS-based user travel route data from at least one user terminal.

12. The pedestrian route providing system of claim 11, wherein the social mapping data includes information on an image, a type, and a location of an obstacle.

13. The pedestrian route providing system of claim 11, wherein the priority of the walkway information providing unit is set in order of the video record collecting unit, the social mapping data collecting unit, and the GIS data collecting unit with respect to the walkway information data excluding the environmental information data, and
in the case of a blind spot on the walkway that is not collected by the video record collecting unit, the social mapping data collecting unit is set to the highest priority, and
in the case of the environmental information data, the IoT sensor data collecting unit is set to the highest priority.

14. The pedestrian route providing system of claim 11, wherein the GIS data includes a node and a link, the link represents attribute information of a road, and the node is a point at which an attribute of the link varies.

15. The pedestrian route providing system of claim 14, wherein the attribute information of the road includes a highway, an automobile-only road, a bicycle-only way, a pedestrian-only sidewalk, a roadway, a sidewalk, 3 lanes, an intersection, and a mixed-use road for roadway and sidewalk.

16. The pedestrian route providing system of claim 14, wherein the attribute information of the road includes a slope of the road and presence or absence of Braille block.

17. A pedestrian route providing method performed by a pedestrian route providing system, the pedestrian route providing method comprising:
a raw data collecting operation of collecting, from a walkway information providing unit, raw data that includes walkway information data;
a walkway information data processing operation of extracting the walkway information data from the raw data;
a user information and departure/destination information receiving operation of receiving user information and departure and destination information from a user terminal;
a movability-status-on-walkway determining operation of determining a movability status of walkways present from the departure to the destination, based on the extracted walkway information data;
an optimal walking route generating operation of generating at least one optimal walking route based on the determination results; and
an optimal walking route providing operation of providing the at least one optimal walking route to the user terminal,
wherein the movability-status-on-walkway determining operation determines whether it is possible to travel on a corresponding walkway according to the user information.

18. The pedestrian route providing method of claim 17, wherein the user information includes presence or absence of disability, a type of disability, a disability assistance method, and presence or absence of an accompanying person.

19. The pedestrian route providing method of claim 18, wherein the disability assistance method includes a wheelchair, and
the user information receiving operation receives input as to whether the wheelchair is manual or automatic from the user terminal.

20. The pedestrian route providing method of claim 17, wherein the walkway information data includes user travel route data representing travel route data collected based on a global positioning system (GPS) from the user terminal, and
the movability-status-on-walkway determining operation determines whether it is possible to travel on the walkway is possible by setting the user travel route data to the highest priority.

21. The pedestrian route providing method of claim 17, wherein the walkway information data processing operation includes:
a walkway information data extracting operation of extracting the walkway information data from the raw data;
a data duplication determining operation of determining whether duplicate data is present in the extracted walkway information data; and
a data freshness determining operation of extracting the most recent data when duplicated walkway information data is present in the data duplication determining operation.

22. The pedestrian route providing method of claim 21, wherein, when there is no difference in freshness in the duplicate walkway information data, the data freshness determining operation extracts the walkway information data according to priority of the walkway information providing unit that provides the walkway information data to the pedestrian route providing unit.

23. The pedestrian route providing method of claim 22, wherein the walkway information data includes road information data, building information data, facility information data, non-fixed obstacle data, environmental information data, safety information data, and user travel route data, and
the walkway information providing unit includes:
a geographic information system (GIS) data collecting unit configured to collect GIS data that includes the road information data, the building information data, and the facility information data;
a video record collecting unit including a closed circuit television (CCTV) installed on the walkway and a black box of a vehicle;
an Internet of things (IoT) sensor data collecting unit including a smart pole and walkway facility installed around the walkway or an IoT device installed inside or outside a building;
a social mapping data collecting unit configured to collect social mapping data from the user terminal; and
a walking route collecting unit configured to collect GPS-based user travel route data from at least one user terminal.

24. The pedestrian route providing method of claim 23, wherein the data freshness determining operation sets the priority of the walkway information providing unit in order of the video record collecting unit, the social mapping data collecting unit, and the GIS data collecting unit with respect to the walkway information data excluding the environmental information data, sets the social mapping data collecting unit to the highest priority in the case of a blind spot on the walkway that is not collected by the video record collecting unit, and sets the IoT sensor data collecting unit to the highest priority in the case of the environmental information data.
